# EUROPEAN PATENT SPECIFICATION

(11) **EP 3 526 721 B1**
(45) Date of publication and mention of the grant of the patent: **14.08.2024**
(21) Application number: 16790418.4
(22) Date of filing: 14.10.2016
(51) Int. Cl.: G06F 21/34, G06F 21/40, G06F 21/41, H04L 9/32, H04L 9/00, H04L 9/40

(54) **METHOD, DEVICE AND SYSTEM FOR VALIDATING SENSITIVE USER DATA TRANSACTIONS WITHIN TRUSTED CIRCLE**
VERFAHREN, VORRICHTUNG UND SYSTEM ZUR VALIDIERUNG EMPFINDLICHER BENUTZERDATENTRANSAKTIONEN INNERHALB EINES VERTRAUENSWÜRDIGEN KREISES
PROCÉDÉ, DISPOSITIF ET SYSTÈME DE VALIDATION DE TRANSACTIONS DE DONNÉES D'UTILISATEURS SENSIBLES DANS UN CERCLE DE CONFIANCE

(43) Date of publication of application: 21.08.2019
(73) Proprietor: Nokia Technologies Oy, 02610 Espoo (FI)
(72) Inventor: LI, Hongwei, Cambridge CB4 1RY (GB); BAYKANER, Khan, Upper Cambourne Cambridgeshire CB23 6BL (GB); DUBBA, Krishna, Bishops Stortford CM23 3BE (GB); ISOPOUSSU, Anton, Cambridge CB4 3BY (GB)
(74) Representative: Espatent Oy
(86) International application number: PCT/FI2016/050720
(87) International publication number: WO 2018/069566

(56) References cited:
- US-A1- 2015 127 940
- GUY ZYSKIND ET AL: "Decentralizing Privacy: Using Blockchain to Protect Personal Data", THE INSTITUTE OF ELECTRICAL AND ELECTRONICS ENGINEERS, INC. (IEEE) CONFERENCE PROCEEDINGS, 1 May 2015 (2015-05-01), Piscataway, pages 180, XP055360065
- CONNER FROMKNECHT ET AL: "A Decentralized Public Key Infrastructure with Identity Retention", INTERNATIONAL ASSOCIATION FOR CRYPTOLOGIC RESEARCH,, vol. 20141111:124302, 11 November 2014 (2014-11-11), pages 1 - 16, XP061017286
- ANDREW EGBERT ET AL: "Identity Chains", INTERNATIONAL ASSOCIATION FOR CRYPTOLOGIC RESEARCH,, vol. 20160517:151556, 16 May 2016 (2016-05-16), pages 1 - 10, XP061020930

## Description

### TECHNICAL FIELD

The present application generally relates to trusted circles, blockchains, distributed ledgers, sensitive user data and cryptographic protocols.

### BACKGROUND

This section illustrates useful background information without admission of any technique described herein representative of the state of the art.

With the increasing number of smart devices used in our daily life, it becomes more and more difficult to manage all the passwords used across all our devices, services and applications effectively.

For password management over websites the problem is currently partially solved by online sync tools provided by a third party, for example. Such solution, however, usually does not work for software applications and the owner still has to enter logon details manually. Each user device then has to remember all login details and any update from one user device will require manually updating every other user device. Strong passwords required by many websites or service providers need to be written down before one can input them on other devices.

A blockchain is a distributed database that maintains a continuously growing list of data records hardened against tampering and revision. It consists of data structure blocks, which hold exclusively data in initial blockchain implementations, and both data and programs in some implementations, with each block holding batches of individual transactions and the results of any blockchain executables. Each block contains a timestamp and information linking it to a previous block.

The blockchain is seen as the main technical innovation of bitcoin, where it serves as the public ledger of all bitcoin transactions. Bitcoin is peer-to-peer, every user is allowed to connect to the network, send new transactions to it, verify transactions, and create new blocks, which is why it is called permissionless. This original design has been the inspiration for other cryptocurrencies and distributed databases.

Password management software solutions available tend to solve this problem by providing cross-platform solutions with a single account syncing all user passwords. All passwords are saved on a third party server and protected with a single master password. This entails great risks for the account to be compromised one way or the other.

US2015127940A1 is a publication titled as a "secure distributed information and password management" that discloses, per abstract, that a method, performed by a computer device, may include receiving an indication that a first user has acquired rights to access a digital content; generating a key for the digital content; encrypting the digital content using the generated key to generate encrypted digital content; obtaining a first passcode; and providing the first passcode and the encrypted digital content to a user device associated with the first user. The DRM system of this publication may maintain a list of passcodes in a passcode blockchain. The passcode blockchain may store a sequence of passcodes associated with the particular digital content and may indicate a currently valid passcode. For example, a first passcode may be assigned to a first user and designated as the valid passcode. If the access rights are transferred to a second user, a second passcode may be obtained and added to the blockchain, provided to the second user, and designated as the valid passcode.

A technical solution is needed to solve the problem of validating sensitive user data transactions within a plurality of user nodes owned by a same owner.

### SUMMARY

The scope of protection sought for various embodiments of the invention is set out by the independent claims. The embodiments and features, if any, described in this specification that do not fall under the scope of the independent claims are to be interpreted as examples useful for understanding various embodiments of the invention.

According to a first example aspect of the present invention, there is provided an apparatus as defined by appended claim 1.

According to a second example aspect of the present invention, there is a method as defined by appended claim 13.

According to a third example aspect of the present invention, there is provided a computer program embodied on a computer readable non-transitory medium comprising computer executable program code, which when executed by at least one processor of a device, causes the device to perform the method of the second example aspect.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows a schematic drawing of a system of an example embodiment;
Fig. 2 shows another schematic drawing of a system of an example embodiment;
Fig. 3 shows a flow diagram illustrating a method according to an example embodiment of the invention;
Fig. 4 shows a block diagram of a device of an example embodiment;
Fig. 5 shows a block diagram of a server apparatus of an example embodiment; and
Fig. 6 shows another schematic drawing of a system of an example embodiment.

### DETAILED DESCRIPTON OF THE DRAWINGS

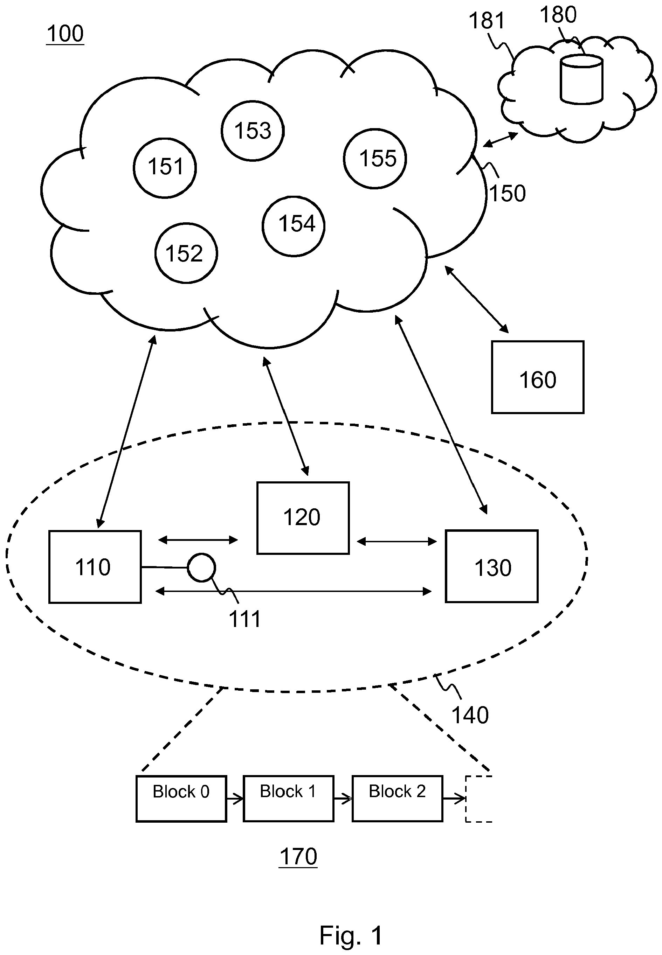

Example embodiments of the present invention and its potential advantages are understood by referring to Figs. 1 through 6 of the drawings. In this document, like reference signs denote like parts or steps.

In this document, the terms couple and connect may refer to direct contact between components or to coupling through some intervening component(s).

Using blockchains to manage access rights of devices to various services, and sharing passwords among all personal devices will substantially increase the security and privacy level for the user. All sensitive user data will only live locally in user's own devices and no third party needs to be trusted.

Distributed ledger (blockchain) technology (DLT) is used for improving security and usability. A blockchain is a distributed computing architecture, where every network node executes and records same transactions, which are grouped into blocks. Only one block can be added to the blockchain at a time, and every block contains a mathematical proof verifying that it follows in sequence from the previous block. Thus, blockchain "distributed database" is kept in consensus across the whole network. Individual user interactions with the ledger (transactions) are secured by strong cryptography. Nodes that maintain and verify the network may be incentivized by mathematically enforced economic incentives coded into the protocol.

In an embodiment, a blockchain can also be used privately, as a private blockchain, among all smart devices of one owner or among all Internet of Things (IoT) devices in a single household, for example. The private blockchain may be employed aiming to apply blockchain technology to management of smart devices for a single user (or family) including access rights to devices, services, applications, and maintaining and providing banking passwords, for example.

Fig. 1 shows a schematic drawing of a system 100 of an example embodiment.

At the minimum, the system 100 comprises at least one network node 151-155 for transceiving data within the system 100 over a public network 150 with user nodes 110-130.

Fig. 1 shows an embodiment of a network 150, which comprises a plurality of network nodes 151-155 and may be implemented by a plurality of information handling systems. In embodiments, an information handling system includes any instrumentality or aggregate of instrumentalities operable to compute, classify, process, transmit, receive, retrieve, originate, switch, route, store, display, manifest, detect, record, reproduce, handle, or utilize any form of information, intelligence, or data for business, scientific, control, entertainment, or other purposes. For example, an information handling system can be a personal computer, a laptop computer, a smart phone, a tablet device, a smart package, or other electronic device, a network server, a network storage device, a database, a data system, a switch router or other network communication device, or any other suitable device and may vary in size, shape, performance, functionality, and price. Further, an information handling system may include processing resources for executing machine-executable code, such as a central processing unit (CPU), a programmable logic array (PLA), an embedded device such as a System-on-a-Chip, or other control logic hardware. An information handling system may also include one or more computer-readable media for storing machine-executable code, such as software or data. Additional components of an information handling system can include one or more storage devices that can store machine-executable code, one or more communications ports for communicating with external devices, and various input and output (I/O) devices, such as a keyboard, a mouse, and a video display.

A user (can also be e.g. a family including all family members) may have a plurality of devices 110-130, such as home desktops, laptops, tablets, mobile phones and smartwatches, for example. Blockchain technology may be used to manage all those devices. Each device 110-130 corresponds to a node of a private blockchain 170 defining a trusted circle 140 comprising at least one node of a plurality of nodes 110-130.

In an embodiment, sensitive user data is recorded in a private blockchain 170 and distributed/monitored among other devices of the trusted circle 140. Sensitive user data that can be recorded within the blockchain 170 includes, but is not limited to, device ID, name, type, owner, biometric capabilities of the device, biometric identifier of a user, usual location, access rights/level to sensitive user information including passwords to websites and applications, and usage histories, for example.

Any device of the plurality of devices 110-130 has a public-private key pair that can be used for authentication and digital signature activities on the blockchain 170.

The network 150 represents a computing environment including a plurality of nodes 151-155 that may be accessed by any of the user devices 110-130. The system 100 maintains a distributed data structure, which may be referred to herein as a secure distributed transaction ledger or a blockchain 170 that may be utilized for accessing the nodes 151-155, their services provided or applications. This secure distributed transaction ledger may support various functions, such as distributing computational tasks from one or more systems to one or more other systems, supporting a cryptocurrency, messaging, among other functions. The nodes 151-155 may comprise, for example, service provider systems requiring user registration and access control with secure user specific login/password information.

The node 110-130 may comprise a user device, an Internet of Things (IoT) device, a sensor, an integrated device or home electronics device, for example. The user device may also comprise a wrist-based device, a belt device, clothing-integrated device, or a biometric sensor, for example.

The system 100 may comprise a further node 160 not belonging to the trusted circle 140 but accessible to the network 150.

In an embodiment, a first node 110 may receive a notification information identifying a trusted circle 140 comprising a plurality of nodes, such as the first node 110, a second node 120 and a third node, wherein the nodes 110-130 are configured to define a private blockchain. Private blockchain data is maintained within the trusted circle 140 according to pre-defined settings, wherein the private blockchain data may be shared or divided between nodes 110-130 of the trusted circle 140 based on the pre-defined settings.

In an embodiment, nodes correspond to devices. Thus, devices 110-130 are paired and in response to pairing the devices 110-130 collaborate on storing and securing the contents of a distributed ledger. This technique enables, for example, home devices with little storage (such as general IoT nodes or sensor nodes) illustrated as node 111 to collaborate on forming one "super" node corresponding to the trusted circle 140 with capacity similar to that of an ordinary node hosted on a PC or in a cloud. Furthermore also other resources may be shared within the trusted circle 140, such as hashing power, or listing of peers, for example.

Any node 110-130 may generate transaction data relating to the node and hash the data using a cryptographic hashing function, to create a cryptographic hash block.

In an embodiment, the trusted circle 140 may comprise a gateway node 110 configured to control access of other node 111 within the trusted circle 140 to external network 150 outside the trusted circle 140.

In an embodiment, the gateway node 110 may receive data without hashing from other node 111 within the trusted circle 140 and carry out the data hashing using a cryptographic hashing function, to create a cryptographic hash block.

A node 110-130 may receive notification information comprising user identification information associated with the trusted circle 140. The notification information may be received, for example, from another node 110-130 over a local connection, or over a wide area connection 150 from a remote device 160. The local connection may be implemented, for example, via at least one of the following short-range communication protocol: Near Field Communication (NFC), Bluetooth^{™}, Wi-Fi, Ethernet and Universal Serial Bus (USB).

Furthermore, a node 110-130 may receive instructions information to collaborate on a data storage comprising private blockchain data of the trusted user circle 140.

The system 100 may comprise nodes 160 that do not belong to any trusted circle 140. Such nodes 160 may communicate with other nodes within the system 100. The node 160 may be connected to a public network 150.

In an embodiment, the nodes 110, 111 are integrated as a single device. Alternatively, the gateway node 110 and another node 111 are separate entities and connected via a local short-range communication interface, and the gateway node 110 and a remote node 160 are connected via a wide area communication interface 150, for example. It is also possible to arrange the nodes 110-130 to be releasably connectable to each other so that in one operating mode they are integrated together and in second operating mode they are separate entities.

In an embodiment, after hashing, either the trusted circle node 111, 120, 130 or the gateway node 110 is configured to record the cryptographic hash block associated with a digital signature to a block of a private blockchain 170.

In an embodiment, transaction data may be encrypted before hashing. For example, asymmetrical encrypting of the sensitive user data may be carried out by the trusted node 110-130. The encrypted data may be stored to at least one node. In case the system comprises a gateway node 110, it may be beneficial to store most of the trusted circle related data within the gateway node 110 due to it is easier to arrange larger memory and storing capacity within the gateway node 110 than within the trusted node 111.

An owner of blockchain nodes 110-130 may have many nodes (as for instance could be the case in IoT or in household). While the owner may not trust any device 160 he does not own, he may trust his own devices 110-130. Thus a trusted circle 140 of nodes 110-130 may be established.

To associate a plurality of nodes to belong in a same trusted circle 140, following procedures may be applied.

First, let's assume that node 130 is to be added to the system 100. After first start up, the node 130 remains inactive (it may be syncing, but otherwise not operational) until such a point where the node 130 receives notification about who the owner is. This may be accomplished through a NFC, Bluetooth, USB or short-range communication protocol over local connection from another, already trusted node, such as node 120, or a remote device 160 of the owner.

Second, nodes 110-130 of the same owner may receive instructions to collaborate on data storage. Such an instruction may come in the form of a blockchain transaction, a jumper or switch being set or through a communication interface such as NFC, Bluetooth, or USB. After receiving these instructions, the nodes 110-130 will share and/or divide blockchain data amongst them and will keep data according to their own local agreement. Such an agreement may be made using a database, a local blockchain or be a part of global blockchain. In case of the latter, other nodes would be able to read the agreement and direct the transactions to the relevant nodes.

In an embodiment, no gateway node is required in the system 100 but the nodes 110-130 are configured to generate transaction data and further take care of encrypting the data if needed, as well as hashing the data using a cryptographic hashing function, to create a cryptographic hash block, to record the cryptographic hash block associated with a digital signature of a node 110-130 to a block of a digital blockchain 170 and to transmit the data item to a peer node 151-155, for example.

The local short-range communication interface (within trusted circle 140, for example) may comprise wired or wireless interface. The wide area communication interface may comprise a public network 150, such as Internet.

In an embodiment, the wired interface comprises, for example, at least one of the following: an Ethernet, a Universal Serial Bus (USB); and a High-Definition Multimedia Interface (HDMI). The wireless interface comprises, for example, at least one of the following: a Bluetooth^{™} network; a Radio Frequency Identification (RF-ID) network; a near field communication (NFC) network; a wireless local area network; and an IEEE 802.11 network.

In an embodiment, the first node 110 and the second node 120 may be implemented as separate devices communicating with each other over a local connection. The local connection may comprise also other wireless non-cellular connection. The wireless non-cellular connection may comprise industrial, scientific and medical (ISM) radio bands that are radio bands (portions of the radio spectrum) reserved internationally for the use of radio frequency (RF) energy for industrial, scientific and medical purposes, for example. Alternatively, the first node 110 may be comprised by the second node 120. The trusted circle 140 may also correspond to a system within user's home, wherein the first node 110 and the second node communicate with each other over a local connection.

In an embodiment, a communication interface module of at least one of the nodes 110-130 may comprise location modules for tracking location information of the node. Such location modules may comprise a module for providing a connection to satellite based global positioning system (e.g. GPS), a module for cellular based positioning system, a module for indoor positioning, a module for wireless non-cellular positioning system (e.g. Wi-Fi) or a module for hybrid positioning system, for example.

In an embodiment, the system 100 comprises a server apparatus 180, which comprises a storage device for example for storing and providing user data, service data and subscriber information, over data connection to the network 150. The service data may comprise configuration data, account creation data, transaction data of the nodes, and digital blockchain data, for example.

In an embodiment, a proprietary application in the node 110-130 may be a client application of a service whose server application is running on the server apparatus 180 of the system 100. The proprietary application may capture or process transaction data for the service and provide the transaction data hashing, blockchain recording and transceiving for the service. In an embodiment, information from the node 110-130 to the network node 151-155 and/or the server 180 is transceived via the connections automatically. Thus the user of the nodes 110-130 may not need to do any control for the service. The system server 180 may also maintain account creation process details for the service, such as attaching new nodes to the system 100 as well as maintaining authorized users and devices.

In an embodiment, history data of earlier transaction data, user profiles, settings, agreements, smart contracts, and blockchains may be maintained at the server 180, for example.

The server 180 may also provide a cloud service 181 for the data of devices 110-130. Optionally, further devices may be added, such as peripheral devices for maintaining, providing or processing node data and communication devices for connecting the peripheral devices to the system 100.

The node 111 may operate as a sensor, such as a biometric sensor.

The node 111 may also be applied to human skin or body.

The node 110-130 may comprise a user interface or alternatively may not comprise user interface at all but instead the node is remotely operated via another trusted node or the remote device 160. The node 110-130 is capable of locally executing software program code. The software program code may be a client application, such as an electronic wallet application, or a client application of a service whose server application is running on a server 180 of the system 100.

Embodiments of this invention describe how to implement a system 100 where nodes 110-130 can store sensitive user data in such a way that a remote node 151-155 or device 160 later on can confirm the authenticity of the data.

Embodiments may use an open distributed ledger to keep a record of hashes of encrypted user data. The data may be encrypted asymmetrically such that anyone can redo the encryption of the raw data. After encryption the data is hashed and the result is added onto a ledger. Additionally a trusted circle 140 for certain nodes 110-130 can be created and private blockchain data shared and/or divided between the nodes within the trusted circle 140.

A node 110-130 may be located on the user household device, or as user's personal smart device, for example, and a remote device 160 may be located at external location, for example summer cottage or workplace. The node 110-130 may continuously collect data from the user. The data may also be encrypted asymmetrically and before sharing to another node. A hash of (the asymmetrically encrypted or unencrypted) data may be computed by any of the nodes 110-130 and added to the private blockchain 140. The blockchain 140 may be protected by a proof algorithm, such as proof-of-work, proof-of-stake or the like. The user can now at any time access data (decrypt the data if needed) and send it to a third party 151-155 or share with other trusted nodes (in practice this may be automated, and the user simply chooses which third parties or trusted nodes may receive which types of data on a continuous basis). The other trusted node can then verify that this was indeed the original data that was collected by the node, by first asymmetrically encrypting it, computing the hash and verifying its presence on the private blockchain 140.

In an embodiment, the default behavior of the nodes 110-130 may be not trust other nodes. Hence, the nodes 110-130 may always store the full blockchain and corresponding data. The owner of the devices 110-130 can dictate that how the devices 110-130 utilize shared storage. In an embodiment, the nodes 110-130 cannot have distributed storage outside of the owner's devices. That is to say, if one owner has a couple of nodes 110-130 and another owner has a couple of nodes 160, the first owner can make his/her nodes collaborate, but cannot get them to share storage with the second owner's nodes. In some implementations it may be possible for two owners to express mutual consent for their devices to collaborate.

Devices of trusted circle 140 may be changed by adding or removing nodes. Changes (Add/remove) of devices 110-130 on the private blockchain 170 and changes of sensitive user data, such as website login information (username/password) and/or usage of device for finical transactions, may require confirmation (vote) by other nodes. For example, confirmation from at least one other node may be needed. Alternatively, majority voting may be setup according to user's preference and history data may be recorded in real-time into the private blockchain 170. For example, when the user tries to pay a merchant online using device node 110, payment information will only be passed to the webpage of a service provider node 151 by the private blockchain 170 after confirmation (vote) from a secured biometric device 111. The transaction history is saved in the private blockchain 170 and notice will be pushed to all other devices of the trusted circle 140 and for future reference. Any suspicious usage of the private blockchain 170 is thus revealed immediately for the owner.

Embodiments disclosed make it easier for management of user's sensitive data across all kinds of devices and enhances security for various online activities with a variety of features.

First, the blockchain 170 is private and only approved devices 110-130 are allowed to access it. All devices 110-130 are nodes of the private blockchain 170 and all sensitive information recorded in the private blockchain 170 may be synchronized in real-time or whenever a device 110-130 is turned on, for example.

Second, the private blockchain 170 may keep track of all devices within the network and provide comprehensive information about their rights over the blockchain network and for sensitive information stored in the private blockchain 170. Changes of devices 110-130 and their rights over the blockchain network will need to be approved by the distributed consensus protocol, for example.

Third, a distributed consensus protocol may be used to manage the access rights to the private blockchain 170 information. Any adding/deleting devices 110-130 and handling of highly sensitive information will require approval from other devices 110-130 through a distributed consensus protocol and a new block will be created correspondingly.

Fourth, new blocks can be added based on a majority vote of the nodes 110-130 or by a randomly picked node with high security settings, like picking device 110 with biometric capability, such as biometric sensor 111.

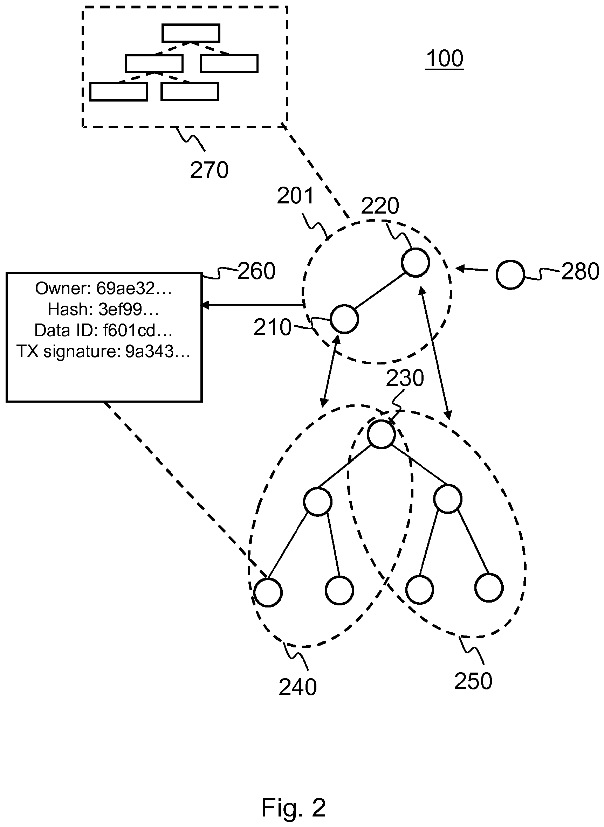

Fig. 2 shows another schematic drawing of a system of an example embodiment.

A trusted circle 201 comprises a plurality of trusted nodes 210, 220. The data may be shared and/or divided between the nodes 210, 220 in various ways. The data may comprise private blockchain and corresponding data.

Initially, instructions information for a node 210 to be paired with trusted node 220 may be received using a blockchain transaction.

Facilitation of verification and authentication of transactions of the nodes 210, 220 of the trusted circle 201 may be carried out according to the terms of the pre-defined settings of the private blockchain 230, 240, 250. The pre-defined settings may comprise at least one of an agreement and a smart contract of the trusted circle 201.

In an embodiment, the first node 210 and the second node 220 comprise Internet of Things (IoT) devices, smart devices, computer devices, laptops or such devices of a user.

In an embodiment, the private blockchain 230, 240, 250 data may be divided between nodes of the trusted circle 210, 220 using a self-balancing binary search tree, such as an AVL tree or a Patricia tree.

In an embodiment, an AVL tree is used. Such implementation may occasionally require large amount of data to be transceived between the nodes 210, 220 and should only be used when this is possible. In other cases it may be more feasible to use a Patricia tree (also known as a Radix tree). This particular choice of abstract data type makes it easy to route the data updates to the correct node and does not have overhead due to data exchange upon insertion/deletion. In Fig. 2 it is illustrated how the two nodes 210, 220 may share the data between them.

At the time where a proof-of-work should be found, the nodes 210, 220 may combine the hashes from the transactions to form a Merkle tree, or simply keep a hash of the state of the full storage system, which will enter the next block. In some implementations it may be feasible to do both as this allows to implement a fast-forward mechanism that makes new nodes catch up with the network in much less time than what they would need if only the Merkle hash of the transactions are stored in the blocks.

In addition to distributing the storage, the nodes 210, 220 may also distribute hash power. This may happen within a trusted circle 201 and it may be done across subsets of the networks by making pools, for example. Unlike the storage, distribution of the hash power does not require trust and can therefore easily be implemented in many various scenarios.

It is worth noting that nodes 210, 220 in the trusted circle 201 may not be equal in computational power and/or storage capacity. Nodes may also fulfill different roles and/or additional roles to their blockchain capabilities. For instance, in one scenario one node may act as a gateway (or router). In an IoT setting, such gateway node may store most of the blockchain while the remaining nodes are fairly low-power and low capacity devices that only store small parts of the blockchain. Within this scenario, the gateway may ensure that new nodes are unable to communicate with the outside world until being accepted as part of a cluster.

In an embodiment, imbalanced situations may also be covered, wherein first node related blockchain data is maintained by a second node together with the second node related blockchain data.

Since this protocol has small clusters 201 of nodes sharing storage one obtains a higher level of stability in comparison with building a fully distributed storage as a feature of the ledger. For instance, it is well known that AVL lookup tables are likely to break down once scaled to a large enough size. Making clusters for different users gives incentive for every user to keep a full record of the chain since they cannot earn rewards without it and that's a crucial difference to a more general scheme where a user can earn incentives even without a full record.

In an embodiment, to keep track of trusted nodes 210, 220 in the trusted circle 201, different schemes may be implemented. In a first version, one would simple keep a local text-file on every node 210, 220 to keep track of trusted peers. Propagating new trusted peers would then be done by accepting a list of a new peer's public key and, optionally, other identifiers such as MAC addresses etc., from already trusted peers. To ensure tamper resistance of the peer list one may include a protocol such as to use the already existing blockchain to secure and verify received peer lists. In another embodiment, one may simply use a distributed database amongst the peers. This database can either be deployed using a regular database systems or a local blockchain. If a local blockchain is used, one may add the Merkle hashes onto a global blockchain to verify the states of the local blockchain for verifying information.

In an embodiment, each node 210, 220 of the trusted user circle 201 may maintain information of other trusted nodes 210, 220 of the trusted user circle 201. The information of other trusted nodes may comprise a public key of each trusted node. The information of other trusted nodes may also comprise a node identifier of a trusted node such as MAC (Media Access Control) address.

In an embodiment, transaction data may be generated by a third node 280 not belonging to the trusted circle 201. The transaction data is hashed using a cryptographic hashing function, to create a cryptographic hash block, the cryptographic hash block associated with a digital signature of the third node 280 may be transmitted to a public blockchain 270, and the transaction data is transmitted to the trusted node 210, 220 for verification. The cryptographic hash block associated with the digital signature of the third node 280 may be recorded to the private blockchain 230, 240, 250 in response to the verification by the trusted node 210, 220.

In an embodiment, the private blockchain related data 230, 240, 250 is maintained by the gateway node only. The related data may correspond to database of the related data.

In an embodiment, a node identifier is assigned to each node 210, 220 of the trusted circle 201, wherein the node identifier may comprise a public key.

Furthermore, a trusted user circle identifier may be assigned to the trusted circle 201. Routing transactions from nodes 280 external to the trusted user circle 201 may base on the trusted circle identifier.

The transaction data may be stored at a node 210, 220 that adds a hash of an asymmetric encryption on to generate a hash block 260. In some embodiments, the data may be stored directly on the node 210, 220.

The hash block 260 of the asymmetrically encrypted data may be computed and added to a private blockchain 230-250. Based on agreed settings, the hash block is added for example to portion 240 of the private blockchain that is maintained by a node 210 responsible for the particular transaction data, the hash block 260 and associated data. The private blockchain 230-250 may be protected by a proof algorithm, such as proof-of-work, proof-of-stake or the like. The user can now at any time decrypt the data and send it to another node within a network system 100 (in practice this may be automated, and the user simply chooses which nodes may access which types of data on a continuous basis).

Any trusted node can then verify that this was indeed the original data that was collected by the node 210, 220, by first asymmetrically encrypting it, computing the hash and verifying its presence in the private blockchain. Nodes 210, 220 may be nodes in a network of nodes, such as a network for Internet of Things (IoT).

In an embodiment, the private blockchain 230-250 is implemented using Merkle trees. Aggregating hash values of the exchanged data in a Merkle tree is efficient, since the "root" 230 of the Merkle tree provides a compressed digest of all individual hash values, so that the Merkle tree reduces storage requirements.

A distributed ledger is a database that can securely record user transaction data for sharing across a network through entirely transparent updates of information.

The private blockchain data structure 230-250 is an ordered, back-linked list of blocks of transactions. The private blockchain 230-250 can be stored as a flat file, or in a simple database. Blocks 260 are linked "back" each referring to the previous block in the chain. The private blockchain 230-250 is often visualized as a stack, with blocks layered on top or next of each other and the first block serving as the foundation of the stack. The visualization of blocks stacked on top of each other results in the use of terms such as "height" to refer to the distance from the first block, and "top" or "tip" to refer to the most recently added block.

In an embodiment, although a block has just one parent, it can temporarily have multiple children. Each of the children refers to the same block as its parent and contains the same (parent) hash in the "previous block hash" field. Eventually, only one child block becomes part of the private blockchain 230-250. Even though a block may have more than one child, each block can have only one parent. This is because a block has one single "previous block hash" field referencing its single parent.

In an embodiment, each block within the private blockchain 230-250 may be identified by a hash, generated using a cryptographic hash algorithm (e.g. SHA256) on the header of the block. Each block also references a previous block, known as the parent block, through the "previous block hash" field in the block header. In other words, each block contains the hash of its parent inside its own header. The sequence of hashes linking each block to its parent creates a chain going back all the way to the first block ever created, known as the genesis block.

In an embodiment, each block in the private blockchain 230-250 contains a summary of all the transactions in the block, using a Merkle tree. The Merkle tree 230-250, also known as a binary hash tree, is a data structure used for efficiently summarizing and verifying the integrity of large sets of data. Merkle trees are binary trees containing cryptographic hashes 260. The term "tree" is used in computer science to describe a branching data structure, but these trees are usually displayed upside down with the "root" at the top and the "leaves" at the bottom of a diagram.

In an embodiment, the Merkle tree is omitted and blocks of "transactions" are linked directly together in the private blockchain 230-250.

The private digital blockchain 230-250 corresponds to a distributed cryptographic ledger shared amongst all trusted nodes participating in the trusted circle 201, over which every successfully performed transaction is recorded.

In an embodiment, the private blockchain 230-250 may be integrated to a public blockchain 270.

In an embodiment, received transaction data from a gateway node device 220 (originating or received from the other node 210 of the trusted circle 201) at a remote device 160 (Fig. 1) can be verified by the remote device 160. The remote device 160 may be a computer, server farm, an embedded device or special purpose circuit, for example.

In an embodiment, one may want to store the data unencrypted in which case the asymmetric encryption can be omitted in both cases. In some embodiments the transaction data may be encrypted and hashed by the node 210, 220 itself and only accepted onto the ledger 230-250, 270 if a node 210 public key is verified as a certified device.

In an embodiment, each user device, Internet of Things (loT) device, or node, 110-130, 210, 220 comprises a private key for asymmetric cryptography. The asymmetric cryptographic system uses pairs of keys: public keys that may be disseminated widely paired with private keys, which are known only to the owner. There are two functions that can be achieved: using a public key to authenticate that a message originated with a holder of the paired private key; and/or encrypting a message with a public key to ensure that only the holder of the paired private key can decrypt it.

The private key may be configured to the node by the manufacturer or reseller of the node or generated by the node. Then, when joining a trusted circle, the node may update its public key to other nodes. Alternatively, a node may receive a private key from other trusted node when joining the trusted circle and the corresponding public key made available.

In an embodiment, a device 280 receives transaction data from a node 210, 220. The device 280 hashes the transaction data using a cryptographic hashing function, to create a cryptographic hash block, and fetches a reference cryptographic hash block from private blockchain 230-250. The device 280 may then compare the cryptographic hash block to the fetched block from the private blockchain 230-250. The transaction data may be verified in response to finding a matching cryptographic hash block in a private blockchain 230-250 based on the comparing step.

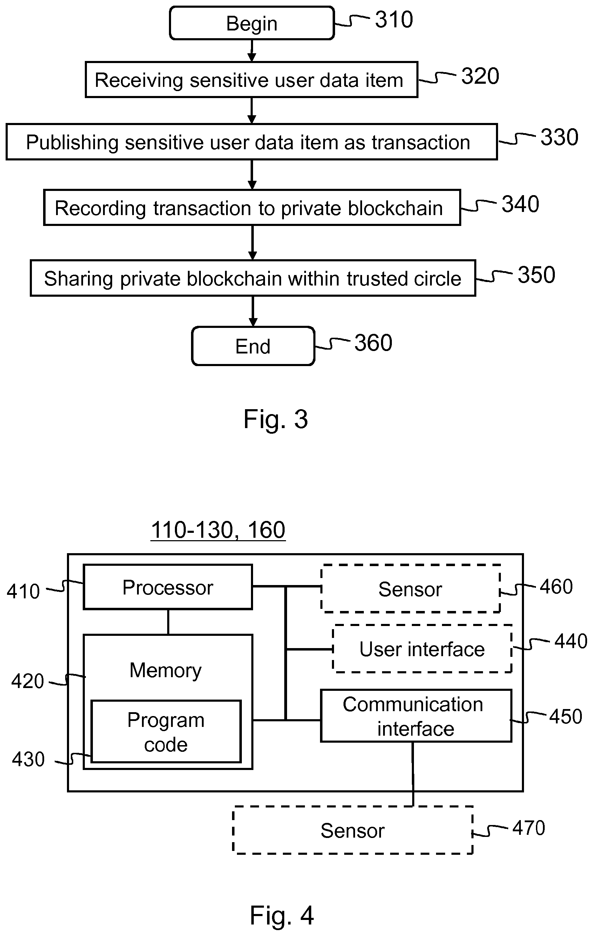

Fig. 3 shows a flow diagram illustrating a computer-implemented method for validating sensitive user data transactions within a trusted circle comprising a plurality of user nodes according to an example embodiment of the invention. The method begins at step 310. In step 320, sensitive user data item is received by a first node of a trusted circle, the sensitive user data item associated with an information handling system accessible by the first node over a public network. In step 330, the sensitive user data item is published as a transaction to a second node of the trusted circle via a distributed consensus system comprised of the plurality of user nodes. In step 340, the transaction is recorded to a private blockchain of the trusted circle in response to the transaction being confirmed by the second node according to the distributed consensus system. In step 350, the private blockchain is shared within the trusted circle. The method ends at step 360.

Fig. 4 presents an example block diagram of a node or a device 110-130, 160 in which various embodiments of the invention may be applied. The device may be a sensor device, a smart device, a user device, a user wearable device or a hub device. All elements described in Fig. 4 are not necessary to be implemented in the same device.

In an embodiment, a sensor 470 may be implemented as a separate device (e.g. a user wearable device) communicating via the communication interface 450 with other device, or as an integrated sensor 460 within the device. The user interface 440 may be implemented also in another device connected via a communication interface 450 to the device 110-130, 160. Such device may comprise a mobile phone, a smart phone, or a tablet, for example. In an embodiment, the device 110-130, 160 may communicate with a plurality of sensors 460, 470, both internal and external sensors, and of a plurality of users. The sensor 460, 470 may be used as biometric sensor to identify the user of the device, using for example, fingerprint detection or retina detection.

The general structure of the device 110-130, 160 comprises a user interface 440, a communication interface 450, a processor 410, and a memory 420 coupled to the processor 410. The device 110-130, 160 further comprises software 430 stored in the memory 420 and operable to be loaded into and executed in the processor 410. The software 430 may comprise one or more software modules and can be in the form of a computer program product. Not all elements of Fig. 4 are necessary but optional for the device 110-130, 160 such as the user interface 440 and sensors 460, 470.

The processor 410 may be, e.g., a central processing unit (CPU), a microprocessor, a digital signal processor (DSP), a graphics processing unit, or the like. Fig. 4 shows one processor 410, but the device 110-130, 160 may comprise a plurality of processors.

The memory 420 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The device 110-130, 160 may comprise a plurality of memories. The memory 420 may be constructed as a part of the device 110-130, 160 or it may be inserted into a slot, port, or the like of the device 110-130, 160 by a user. The memory 420 may serve the sole purpose of storing data, or it may be constructed as a part of an apparatus serving other purposes, such as processing data.

The user interface 440 may comprise circuitry for receiving input from a user of the device 110-130, 160, e.g., via a keyboard, a touchpad, a motion sensor, a touch-screen of the device 110-130, 160 speech recognition circuitry, gesture recognition circuitry or an accessory device, such as a headset or a remote controller, for example. Furthermore, the user interface 440 may comprise circuitry for providing output for the user via a display, a speaker, a touch-sensitive display or a tactile feedback device, for example.

The communication interface module 450 implements at least part of data transmission. The communication interface module 450 may comprise, e.g., a wireless or a wired interface module. The wireless interface may comprise such as a WLAN, Bluetooth, infrared (IR), radio frequency identification (RF ID), NFC, GSM/GPRS, CDMA, WCDMA, or Long Term Evolution (LTE) radio module. The wired interface may comprise such as Ethernet, universal serial bus (USB), High Definition Multimedia Interface (HDMI), Syndicat des Constructeursd' Appareils Radiorecepteurs et Televiseurs (SCART) or Radio Corporation of American (RCA), for example. The communication interface module 450 may be integrated into the device 110-130, 160 or into an adapter, card or the like that may be inserted into a suitable slot or port of the device 110-130, 160. The communication interface module 450 may support one radio interface technology or a plurality of technologies. The communication interface module 450 may support one wired interface technology or a plurality of technologies. The device 110-130, 160 may comprise a plurality of communication interface modules 450.

In an embodiment, the communication interface module 450 may comprise location modules for tracking location of the device 110-130, 160. Such location modules may comprise a module for satellite based global positioning system (e.g. GPS), a module for cellular based positioning system, a module for wireless non-cellular positioning system (e.g. Wi-Fi) or a module for hybrid positioning system, for example.

A skilled person appreciates that in addition to the elements shown in Fig. 4, the device 110-130, 160 may comprise other elements, such as microphones, speakers, sensors, cameras, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like. Additionally, the device 110-130, 160 may comprise a disposable or rechargeable battery (not shown) for powering when external power if external power supply is not available.

In an embodiment, the device 110-130, 160 comprises an additional sensor 460, 470 for providing metadata associated to the transaction data (e.g. biometric information). The metadata may comprise at least one of the following: fingerprint information; retinal scan information; movement information; and location information.

In an embodiment, the device 110-130, 160 comprises speech or gesture recognition means. Using these means, a pre-defined phrase or a gesture may be recognized from the speech or the gesture and translated into control information for the device 110-130, 160.

In an embodiment, the remote device 160 may correspond to the block structure of Fig. 4 without sensors 460, 470, for example.

User wearable devices and sensors thereof provided in various embodiments may be used for example in fingerprint detection and retinal scan detection, for example.

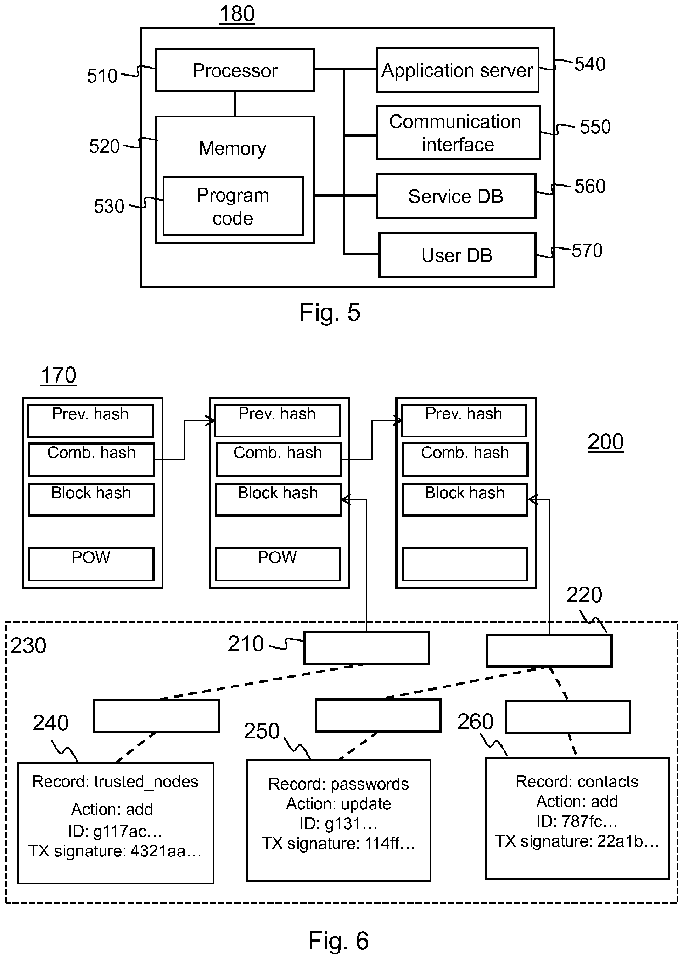

Fig. 5 shows a block diagram of a server apparatus 180 of an example embodiment.

The general structure of the server apparatus 180 comprises a processor 510, and a memory 520 coupled to the processor 510. The server apparatus 180 further comprises software 530 stored in the memory 520 and operable to be loaded into and executed in the processor 510. The software 530 may comprise one or more software modules and can be in the form of a computer program product.

The processor 510 may be, e.g., a central processing unit (CPU), a microprocessor, a digital signal processor (DSP), a graphics processing unit, or the like. Fig. 5 shows one processor 510, but the server apparatus 180 may comprise a plurality of processors.

The memory 520 may be for example a non-volatile or a volatile memory, such as a read-only memory (ROM), a programmable read-only memory (PROM), erasable programmable read-only memory (EPROM), a random-access memory (RAM), a flash memory, a data disk, an optical storage, a magnetic storage, a smart card, or the like. The server apparatus 180 may comprise a plurality of memories. The memory 520 may be constructed as a part of the server apparatus 180 or it may be inserted into a slot, port, or the like of the server apparatus 180 by a user. The memory 520 may serve the sole purpose of storing data, or it may be constructed as a part of an apparatus serving other purposes, such as processing data.

The communication interface module 550 implements at least part of data transmission. The communication interface module 550 may comprise, e.g., a wireless or a wired interface module. The wireless interface may comprise such as a WLAN, Bluetooth, infrared (IR), radio frequency identification (RF ID), GSM/GPRS, CDMA, WCDMA, Long Term Evolution (LTE) or 5G radio module. The wired interface may comprise such as Ethernet or universal serial bus (USB), for example. The communication interface module 550 may be integrated into the server apparatus 130, or into an adapter, card or the like that may be inserted into a suitable slot or port of the server apparatus 180. The communication interface module 550 may support one radio interface technology or a plurality of technologies. Configuration information between the nodes 110-130, 160 and the system server 130 may be transceived using the communication interface 550. Similarly, account creation information between the system server 180 and a service provider may be transceived using the communication interface 550.

An application server 540 provides application services e.g. relating to the user accounts stored in a user database 570 and to the service information stored in a service database 560. The service information may comprise content information, content management information or metrics information, for example. The service information may also comprise information relating to transaction data, history data of earlier transaction data, or blockchains, for example.

A skilled person appreciates that in addition to the elements shown in Fig. 5, the server apparatus 180 may comprise other elements, such as microphones, displays, as well as additional circuitry such as input/output (I/O) circuitry, memory chips, application-specific integrated circuits (ASIC), processing circuitry for specific purposes such as source coding/decoding circuitry, channel coding/decoding circuitry, ciphering/deciphering circuitry, and the like.

In an embodiment, a trusted circle may be initially setup by any trusted node within the system according to pre-defined settings. Hashing and encrypting may be balanced for nodes having better processing power, security, memory capacity and/or powering. Hashing and encryption may also be user changeable based on the user settings or based on the local system administrator, for example.

Fig. 6 shows another schematic drawing of a system 200 of an example embodiment.

In an embodiment, a block 210 is processed by combining previous block information (e.g., a hash of a block header) from a private blockchain 170 with additional information, thereby linking the block 210 with the private blockchain 170. The additional transaction information can include time stamp, device information of the trusted circle, transaction history, login information, passwords, user specified sensitive data, a token and/or a digital signature, for example. Another trusted node can re-calculate a value for the block, typically a hash of the block's header along with hash information from the transactions, until the resulting value satisfies the validity requirement. For example, in embodiments where block 210 is processed via a hash function (e.g., SHA256, Scrypt, etc.), the other trusted node can increment a nonce value until a hash is generated having the desired proof-of-work characteristics, perhaps a number of leading zero bits among other factors, for example.

Once validity block 210 has been properly calculated and/or validated by a trusted node(s), it can be sent to other trusted node(s) in the system so that the validity block 210 will be appended to the private blockchain 170. Thus, validity block 210 becomes part of the sensitive user data history of a user. Validity block 210 can be considered accepted as part of the private blockchain 170 once other trusted node(s) pickup and integrate it into their own copies of the private blockchain 170.

In an embodiment, a previous block 210 and a current block 220 are illustrated in Fig. 6, and illustrating how combined hash of the previous block 210 is used for generation of current block 220 in the private blockchain 170.

An example of a state of the private blockchain 170 is shown below. An example current block of the blockchain 170 may, for example, list all trusted circle devices and their rights over the private blockchain 170 network and sensitive user information.
# BLOCKCHAIN STATE = 34
Hash pointer to previous block: H(block = loc33, hash = dfdkdi3...nb2fp9e5)
## Device list and functionality tables

| No. | Name | Address/ID | Owner | Security | Main location | History |
|---|---|---|---|---|---|---|
| 1 | Laptop1 | 13-44-96-72... | Owner1 | 3 | home | usage... |
| 2 | Laptop2 | 33-45-C6-38... | Owner2 | 2 | home | |
| 3 | Tablet1 | [...] | Owner2 | 2 | home | |
| 4 | Phone_1 | [...] | Owner1 | 3 | owner | |
| 5 | Watch_1 | [...] | Owner2 | 1 | owner | |
| 6 | Phone_2 | [...] | Owner1 | 3 | owner | |
| 7 | Watch_2 | [...] | Owner4 | 1 | owner | |
| 8 | | | | | | |

## Transaction lists since last block
1. Logon history to apps website
2. Online finical transactions
3. Add device 7

## Bank passwords

| Account Name | Owner | Username | Password | Security | History | Other |
|---|---|---|---|---|---|---|
| Service1 | owner1 | usr1 | dfkldfl | 3 | usages since... | answers |
| Service2 | owner2 | usr2 | sdffgpot | 3 | | |
| Socialmedia1 | owner3 | usr3 | ghg;lor | 2 | | |

## Other user specified private information
Security level 1: Birthdays, telephone numbers, address lists, etc.
Security level 2: national insurance numbers
Security level 3: E-passport, electronic copies of drive license, credit card lists

In one embodiment, a pair of public and secret key pairs may be generated at each node/device in order to implement a cryptographic digital signature scheme. The public key can be used as the node/device identifier (used in place of a MAC address), whereas the private key is securely stored in the node/device and it does not leave the node. The private key may be stored within a "secure element", such as a separate electronic module with limited input/output with the rest of the node/device, which is capable of performing digital signatures.

In an embodiment, different uses of public-key cryptography may be utilized. To ensure confidentiality, public-key encryption may be used, in which a message is encrypted with a trusted node's public key. The message cannot be decrypted by anyone who does not possess the matching private key, who is thus presumed to be the owner of that key and the person associated with the public key.

To ensure tamper-proof, digital signatures (signing) may be utilized, in which a message is signed with the first trusted node's private key and can be verified by any second trusted node that has access to the first trusted node public key. This verification proves that the first trusted node had access to the private key, and therefore is likely to be the person associated with the public key. This also ensures that the message has not been tampered with, as any manipulation of the message will result in changes to the encoded message digest, which otherwise remains unchanged between the first node (sender) and the second node (receiver).

In an embodiment, Fig. 6 illustrates one alternative solution for generating transaction records. Instead of generating a transaction block comprising all current sensitive user data, a plurality of sensitive user data blocks may be generated for different types of sensitive user data. For example, a transaction record 240 may be generated for adding/removing trusted nodes to/from the distributed file system, a transaction record 250 for adding/removing passwords to/from the distributed file system, and a transaction record 260 for adding/removing contacts to/from the distributed file system.

In an embodiment, a new node/device may be added to the trusted circle and a new block added to the blockchain 170 and to the distributed file system.

A new node/device of the user can join the blockchain 170 network via following steps, for example. Not all steps are mandatory to carry out the procedure.

First, blockchain management software with suitable user interface may be installed to the node/device (for example, a wallet application).

Second, the new node/device is connected to other trusted nodes/devices on the private blockchain network. This can be done with direct connections like Bluetooth or Wi-Fi or with internet protocol, for example.

Third, the user may initialize an enquiry about available private blockchain 170 and requests to join the trusted circle.

Fourth, the trusted nodes/devices already on the private blockchain 170 gather necessary information and according to distributed consensus protocol push a request to at least one secure trusted node/device for confirmation. The request may be sent to, for example, a trusted node with biometric sensor to ensure the validity of confirmation. Alternatively, random selection of target node with high security level may be selected.

Fifth, the user has to confirm via one of the other nodes/devices to allow the new node/device to join the network of trusted circle and use the private blockchain 170.

Sixth, when the distributed consensus protocol received all positive answer(s), the current block is hashed and a new block will be added to the private blockchain 170 and synced to all nodes/devices of the trusted circle. A notice of new node/device joining the private blockchain 170 network is pushed to all nodes/devices of the trusted circle.

In an embodiment, changing of node/device properties and removing a node/device may follow similar process disclosed above but may only need approval from one node/device. The level or required security can be set in a distributed consensus protocol and/or user specific settings for the trusted circle.

Furthermore, new blocks may be added to the private blockchain 170 to include changing passwords, finical transactions, and user's request of changing certain information, for example.

The distributed consensus protocol can take many different forms, such as, one of the methods below or a combination of them.

A single high-security node of the trusted circle can be picked randomly to decide if the block can be added to the private blockchain 170. Such random choice can be effectively implemented by different means like using a random number generator, using a Proof-of-Work protocol, or a Proof-of-Stake protocol.

A majority vote of the high-security nodes establishes if the block can be added to the private blockchain 170. This may take multiple confirmations from different nodes/devices, but it is worth doing, for instance, when a high-security node/device requests to join the private blockchain 170 network. In such cases, the addition of the new block may pose a security threat and this kind of higher-level security is needed before accepting the block from different nodes/devices.

If a block is requested by a high-security node, it can be immediately added to the private blockchain 170. This is quick and convenient, for instance, when noncritical updates is performed and the security threat can be considered low enough for a majority vote not being needed.

In the preferred embodiment, a majority vote between the high-security nodes shall be used since this makes it harder to attack the network in comparison with a single node.

As an additional security measure, a device/node on the private blockchain 170 that repeatedly proposes blocks that are rejected/not confirmed by the other devices/nodes of the trusted circle may be temporarily locked out from the private blockchain 170. Thus all further proposals are automatically rejected and the device/node's opinion is not considered valid in subsequent majority votes. The suspicious behavior may be flagged up to the user/owner of the trusted circle, and the user may optionally permanently disassociate the suspicious node/device with the private blockchain 170 or unblock the node/device accepting it back into the private blockchain 170 (depending on what seems appropriate to the user; e.g. device has been stolen, or user input error was reason for rejections, for example).

At the time where a proof-of-work (POW) should be found, the nodes may combine the hashes from the transactions to form a Merkle tree 230, or simply keep a hash of the state of the full storage system, which will enter the next block. In some implementations it may be feasible to do both as this allows to implement a fast-forward mechanism that makes new nodes catch up with the network in much less time than what they would need if only the Merkle hash of the transactions are stored in the blocks.

In addition to distributing the storage, the nodes may also distribute hash power. This may happen within a trusted circle and it may be done across subsets of the networks by making pools, for example. Unlike the storage, distribution of the hash power does not necessarily require trust and can therefore easily be implemented in many various scenarios.

In an embodiment, transaction data may be generated by a first node, such as the user laptop. The transaction data is hashed using a cryptographic hashing function, to create a cryptographic hash block, the cryptographic hash block is associated with a digital signature of the first node (laptop) and may be transmitted to a blockchain.

In an embodiment, a node identifier is assigned to each node, wherein the node identifier may comprise a public key.

Furthermore, a trusted user circle identifier may be assigned to the trusted circle. Routing transactions from nodes external to the trusted circle may base on the trusted circle identifier.

The transaction data, such as a sensitive user data item, may be stored at a node that adds a hash of an asymmetric encryption on to generate a hash block 210, 220. In some embodiments, the data may be stored directly on the node.

The hash block 210, 220 of the asymmetrically encrypted data may be computed and added to a private blockchain 170. The private blockchain 170 may be protected by a proof algorithm, such as proof-of-work, proof-of-stake or the like. The user can now at any time decrypt the data and send it to a third party or a peer within a network system 100, 200 (in practice this may be automated, and the user simply chooses which third parties or peers may access which types of data on a continuous basis).

In an embodiment, the blockchain 170 may be implemented using Merkle trees 230. Aggregating hash values of the exchanged data in a Merkle tree 230 is efficient, since the "root" 210, 220 of the Merkle tree 230 provides a compressed digest of all individual hash values, so that the Merkle tree 230 reduces storage requirements.

A distributed ledger is a database that can securely record user transaction data for sharing across a network through entirely transparent updates of information. The blockchain data structure 170 is an ordered, back-linked list of blocks of transactions. The blockchain 170 can be stored as a flat file, or in a simple database. Blocks 210, 220 are linked "back" each referring to the previous block in the chain. The blockchain 170 is often visualized as a vertical stack, with blocks layered on top of each other and the first block serving as the foundation of the stack. The visualization of blocks stacked on top of each other results in the use of terms such as "height" to refer to the distance from the first block, and "top" or "tip" to refer to the most recently added block.

Although a block has just one parent, it can temporarily have multiple children. Each of the children refers to the same block as its parent and contains the same (parent) hash in the "previous block hash" field. Eventually, only one child block becomes part of the blockchain 170. Even though a block may have more than one child, each block 210, 220 can have only one parent. This is because a block has one single "previous block hash" field referencing its single parent.

Each block within the blockchain 170 may be identified by a hash, generated e.g. using a SHA256 cryptographic hash algorithm on the header of the block. Each block also references a previous block, known as the parent block, through the "previous block hash" field in the block header. In other words, each block contains the hash of its parent inside its own header. The sequence of hashes linking each block to its parent creates a chain going back all the way to the first block ever created, known as the genesis block.

In an embodiment, each block in the blockchain 170 contains a summary of all the transactions in the block, using a Merkle tree 230. The Merkle tree 230, also known as a binary hash tree, is a data structure used for efficiently summarizing and verifying the integrity of large sets of data. Merkle trees are binary trees containing cryptographic hashes. The term "tree" is used in computer science to describe a branching data structure, but these trees are usually displayed upside down with the "root" at the top and the "leaves" at the bottom of a diagram.

In an embodiment, the Merkle tree is omitted and blocks of "transactions" are linked directly together in the private blockchain 170.

The digital blockchain 170 corresponds to a distributed cryptographic ledger shared amongst certified and trusted nodes, over which every successfully performed transaction is recorded.

In an embodiment, a private blockchain of a trusted circle may be integrated to a public blockchain.

In an embodiment, received transaction data from a first node (e.g. laptop) at a second node (e.g. tablet) can be verified by the second device. The second device may be a computer, a smart device, a server, an embedded device or special purpose circuit, for example.

In an embodiment, one may want to store the data unencrypted in which case the asymmetric encryption can be omitted in both cases. In some embodiments the transaction data may be encrypted and hashed by the node itself and only accepted onto the ledger 230, if a node public key is verified as a certified device.

In an embodiment, each device, including IoT (Internet of Things) devices, or node, may comprise a private key for asymmetric cryptography. The asymmetric cryptographic system uses pairs of keys: public keys that may be disseminated widely paired with private keys, which are known only to the owner. There are two functions that can be achieved: using a public key to authenticate that a sensitive user data item or message originated with a holder of the paired private key; or encrypting a message or data item with a public key to ensure that only the holder of the paired private key can decrypt it.

The private key may be configured to the node by the manufacturer or reseller of the node. Then, when joining e.g. a trusted circle, the node may update its public key to other trusted node(s) of the trusted circle. Alternatively, a node may receive a private key from other node when joining the trusted circle and the corresponding public key made available by the node.

In an embodiment, a second user node/device 120 (Fig. 1) receives transaction data from a first user node/device 110. The second user node/device 120 hashes the transaction data using a cryptographic hashing function, to create a cryptographic hash block, and fetches a reference cryptographic hash block from the private blockchain 170. The second user node/device 120 may then compare the cryptographic hash block to the fetched block from the private blockchain 170. The transaction data may be verified in response to finding a matching cryptographic hash block in the private blockchain 170 based on the comparing step.

Without in any way limiting the scope, interpretation, or application of the claims appearing below, a technical effect of one or more of the example embodiments disclosed herein is that a user is allowed to manage all his/her smart devices and sensitive information securely in one place.

Another technical effect of one or more of the example embodiments disclosed herein is that risk of hacking of user sensitive data is reduced due to a private blockchain technology that adds a security layer by requiring a consensus protocol for high-security activities. In this way, a malicious party would need to hack into more than one user device to take control.

Another technical effect of one or more of the example embodiments disclosed herein is that usability of a plurality of user devices is improved due to private blockchain technology enabling an immutable usage history of all user devices and sensitive user information that can be convenient for damage control or for legal purposes (provenance).

Another technical effect of one or more of the example embodiments disclosed herein is that management of user's sensitive data across all kinds of devices is made easier and security is enhanced for various online activities.

Another technical effect of one or more of the example embodiments disclosed herein is that an improved construction and storage of transaction data of private blockchain is provided that allows user nodes to actively participate in a blockchain network. Especially in IoT (Internet of Things) network the collaborating nodes have hash power enough to be an active part of securing the network.

Another technical effect of one or more of the example embodiments disclosed herein is that security of user sensitive transaction data transmission between different nodes/devices is improved. Another technical effect of one or more of the example embodiments disclosed herein is that reliability of user transaction data, relating to a plurality of user owned nodes, is improved.

Another technical effect of one or more of the example embodiments disclosed herein is that nodes are allowed to automatically apply sensitive user data of the private blockchain for service provider access, login to network site or client application. Another technical effect is that nodes are allowed to divide blockchain data and associated data while still being able to verify the validity of the data.

Yet another technical effect of one or more of the example embodiments disclosed herein is that less complex systems and nodes are required with limited storage and processing requirements.

Without in any way limiting the scope, interpretation, or application of the claims appearing below, a technical effect of one or more of the example embodiments disclosed herein is that an improved transaction data service system is provided.

If desired, the different functions discussed herein may be performed in a different order and/or concurrently with each other. Furthermore, if desired, one or more of the before-described functions may be optional or may be combined.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications, which may be made without departing from the scope of the present invention as defined in the appended claims.

## Claims

1. A device that is a first node (210) of a trusted circle (201) that comprises a plurality of user nodes (210, 220) owned by a same owner and including the first node (210) and a second node (220); comprising:
means for receiving (320) a sensitive user data item;
the sensitive user data item being associated with an information handling system accessible by the first node over a public network;
**characterized in that** the device further comprises:
means for publishing (330) the sensitive user data item as a transaction to the second node (220) via a distributed consensus system comprised of the plurality of user nodes;
means for recording (340) the transaction to a private blockchain of the trusted circle in response to the transaction being confirmed by the second node (220) according to the distributed consensus system; and
means for sharing (350) the private blockchain within the trusted circle (201).

2. The device of claim 1, wherein the sensitive user data item comprises data relating to at least one of the following:
login password information for a network access location of the information handling system;
login password information for a client application of the information handling system; and
verification information for transaction of the information handling system.

3. The device of claim 1 or 2, further comprising:
means for applying the sensitive user data item by any of the plurality of user nodes of the trusted circle for accessing or communicating with the information handling system.

4. The device of claim 3, further comprising:
means for applying the sensitive user data item locally within at least one node of the plurality of user nodes of the trusted circle.

5. The device of claim 3, further comprising:
means for applying the sensitive user data item over the public network by at least one node of the plurality of user nodes of the trusted circle for accessing or communicating with the information handling system.

6. The device of any of claims 1 to 5, further comprising:
means for defining a record within the private blockchain, the record identifying trusted nodes of the trusted circle, each trusted node being identified by a unique node identifier.

7. The device of claim 6, wherein the unique identifier comprises a public key, the public key associated with a secret key stored in each trusted node.

8. The device of claim 7, further comprising:
means for generating a pair of the public and the secret key at each node of the trusted circle.

9. The device of claim 8, further comprising:
means for storing the secret key within a secure element at each node of the trusted circle, the secure element comprising a separate electronic module with limited input/output within the node.

10. The device of any of claims 1 to 9, further comprising:
means for defining a record within the private blockchain, the record comprising sensitive user data items of at least one user or trusted node of the trusted nodes of the trusted circle, wherein the sensitive user data items comprise at least one of the following: device ID, device name, device type, device owner, biometric capabilities of a user, location information, access rights and/or level to sensitive user data including passwords to websites and applications, and usage histories.

11. The device of any of claims 1 to 10, further comprising:
means for receiving a request to add or remove a trusted node of the trusted circle;
means for publishing the request as a transaction to a second node of the trusted circle via a distributed consensus system comprised of the plurality of user nodes; and
means for recording addition or removal of the trusted node as transaction to the private blockchain of the trusted circle in response to the request transaction being confirmed by the second node according to the distributed consensus system.

12. The device of any of claims 1 to 11, further comprising means for facilitating verification and authentication of transactions of the nodes of the trusted circle according to terms of pre-defined settings of the private blockchain.

13. A method in a first node (210) of a trusted circle (201) that comprises a plurality of user nodes (210, 220) owned by a same owner and including the first node (210) and a second node (220), comprising:
receiving (320) a sensitive user data item;
the sensitive user data item being associated with an information handling system accessible by the first node (210) over a public network;
**characterized in that** the method further comprises:
publishing the sensitive user data item as a transaction to the second node (220) via a distributed consensus system comprised of the plurality of user nodes (210, 220);
recording the transaction to a private blockchain of the trusted circle (201) in response to the transaction being confirmed by the second node (220) according to the distributed consensus system; and
sharing the private blockchain within the trusted circle (201).

14. The method of claim 13, wherein the sensitive user data item comprises data relating to at least one of the following:
login password information for a network access location of the information handling system;
login password information for a client application of the information handling system; and
verification information for transaction of the information handling system.

15. A computer program embodied on a computer readable non-transitory medium comprising computer executable program code, which when executed by at least one processor of a device, causes the device to perform the method of claim 13 or 14.

## Patentansprüche

1. Vorrichtung, bei der es sich um einen ersten Knoten (210) eines vertrauenswürdigen Kreises (201) handelt, der eine Vielzahl von Benutzerknoten (210, 220) umfasst, die im Besitz eines selben Besitzers sind und den ersten Knoten (210) und einen zweiten Knoten (220) beinhalten; die Folgendes umfasst:
Mittel zum Empfangen (320) eines sensitiven Benutzerdatenelements;
wobei das sensitive Benutzerdatenelement mit einem Informationshandhabungssystem verknüpft ist, auf das der erste Knoten über ein öffentliches Netzwerk Zugriff hat;
**dadurch gekennzeichnet, dass** die Vorrichtung ferner Folgendes umfasst:
Mittel zum Veröffentlichen (330) des sensitiven Benutzerdatenelements als eine Transaktion zum zweiten Knoten (220) via ein verteiltes Konsenssystem, das die Vielzahl von Benutzerknoten umfasst;
Mittel zum Aufzeichnen (340) der Transaktion für eine private Blockkette des vertrauenswürdigen Kreises in Reaktion darauf, dass die Transaktion vom zweiten Knoten (220) gemäß dem verteilten Konsenssystem bestätigt wird; und
Mittel zur gemeinsamen Verwendung (350) der privaten Blockkette im vertrauenswürdigen Kreis (201).

2. Vorrichtung nach Anspruch 1, wobei das sensitive Benutzerdatenelement Daten umfasst, die sich auf mindestens eines von Folgendem beziehen:
Anmeldepasswortinformationen für einen Netzwerkzugriffsort des Informationshandhabungssystems;
Anmeldepasswortinformationen für eine Clientanwendung des Informationshandhabungssystems; und
Verifizierungsinformationen für eine Transaktion des Informationshandhabungssystems.

3. Vorrichtung nach Anspruch 1 oder 2, die ferner Folgendes umfasst:
Mittel zum Anwenden des sensitiven Benutzerdatenelements durch einen der Vielzahl von Benutzerknoten des vertrauenswürdigen Kreises zum Zugreifen auf das Informationshandhabungssystem oder Kommunizieren mit demselben.

4. Vorrichtung nach Anspruch 3, die ferner Folgendes umfasst:
Mittel zum lokalen Anwenden des sensitiven Benutzerdatenelements an mindestens einem Knoten der Vielzahl von Benutzerknoten des vertrauenswürdigen Kreises.

5. Vorrichtung nach Anspruch 3, die ferner Folgendes umfasst:
Mittel zum Anwenden des sensitiven Benutzerdatenelements über das öffentliche Netzwerk durch mindestens einen Knoten der Vielzahl von Benutzerknoten des vertrauenswürdigen Kreises zum Zugreifen auf das Informationshandhabungssystem oder Kommunizieren mit demselben.

6. Vorrichtung nach einem der Ansprüche 1 bis 5, die ferner Folgendes umfasst:
Mittel zum Definieren eines Datensatzes in der privaten Blockkette, wobei der Datensatz vertrauenswürdige Knoten des vertrauenswürdigen Kreises identifiziert, wobei jeder vertrauenswürdige Knoten durch eine eindeutige Knotenkennung identifiziert wird.

7. Vorrichtung nach Anspruch 6, wobei die eindeutige Kennung einen öffentlichen Schlüssel umfasst, wobei der öffentliche Schlüssel mit einem geheimen Schlüssel verknüpft ist, der in jedem vertrauenswürdigen Knoten gespeichert ist.

8. Vorrichtung nach Anspruch 7, die ferner Folgendes umfasst:
Mittel zum Erzeugen eines Paares des öffentlichen und des geheimen Schlüssels an jedem Knoten des vertrauenswürdigen Kreises.

9. Vorrichtung nach Anspruch 8, die ferner Folgendes umfasst:
Mittel zum Speichern des geheimen Schlüssels in einem sicheren Element an jedem Knoten des vertrauenswürdigen Kreises, wobei das sichere Element ein separates elektronisches Modul mit begrenztem Eingang/Ausgang in dem Knoten umfasst.

10. Vorrichtung nach einem der Ansprüche 1 bis 9, die ferner Folgendes umfasst:
Mittel zum Definieren eines Datensatzes in der privaten Blockkette, wobei der Datensatz sensitive Benutzerdatenelemente von mindestens einem Benutzer oder einem vertrauenswürdigen Knoten der vertrauenswürdigen Knoten des vertrauenswürdigen Kreises umfasst, wobei die sensitiven Benutzerdatenelemente mindestens eines von Folgendem umfassen: Vorrichtungs-ID, Vorrichtungsname, Vorrichtungstyp, Vorrichtungsbesitzer, biometrische Fähigkeiten eines Benutzers, Standortinformationen, Zugriffsrechte und/oder -stufe für sensitive Benutzerdaten, die Passwörter zu Websites und Anwendungen beinhalten, und Nutzungsverläufe.

11. Vorrichtung nach einem der Ansprüche 1 bis 10, die ferner Folgendes umfasst:
Mittel zum Empfangen einer Anforderung zum Hinzufügen oder Entfernen eines vertrauenswürdigen Knotens des vertrauenswürdigen Kreises;
Mittel zum Veröffentlichen der Anforderung als eine Transaktion für einen zweiten Knoten des vertrauenswürdigen Kreises via ein verteiltes Konsenssystem, das die Vielzahl von Benutzerknoten umfasst; und
Mittel zum Aufzeichnen einer Hinzufügung oder einer Entfernung des vertrauenswürdigen Knotens als eine Transaktion für die private Blockkette des vertrauenswürdigen Kreises in Reaktion darauf, dass die Anforderungstransaktion vom zweiten Knoten gemäß dem verteilten Konsenssystem bestätigt wird.

12. Vorrichtung nach einem der Ansprüche 1 bis 11, die ferner Mittel zum Ermöglichen einer Verifizierung und einer Authentifizierung von Transaktionen der Knoten des vertrauenswürdigen Kreises gemäß Bedingungen von vordefinierten Einstellungen der privaten Blockkette umfasst.

13. Verfahren in einem ersten Knoten (210) eines vertrauenswürdigen Kreises (201), der eine Vielzahl von Benutzerknoten (210, 220) umfasst, die im Besitz eines selben Besitzers sind und den ersten Knoten (210) und einen zweiten Knoten (220) beinhalten, das Folgendes umfasst:
Empfangen (320) eines sensitiven Benutzerdatenelements;
wobei das sensitive Benutzerdatenelement mit einem Informationshandhabungssystem verknüpft ist, auf den der erste Knoten (210) über ein öffentliches Netzwerk Zugriff hat;
**dadurch gekennzeichnet, dass** das Verfahren ferner Folgendes umfasst:
Veröffentlichen des sensitiven Benutzerdatenelements als eine Transaktion zum zweiten Knoten (220) via ein verteiltes Konsenssystem, das die Vielzahl von Benutzerknoten (210, 220) umfasst;
Aufzeichnen der Transaktion für eine private Blockkette des vertrauenswürdigen Kreises (201) in Reaktion darauf, dass die Transaktion vom zweiten Knoten (220) gemäß dem verteilten Konsenssystem bestätigt wird; und
gemeinsames Verwenden der privaten Blockkette im vertrauenswürdigen Kreis (201).

14. Verfahren nach Anspruch 13, wobei das sensitive Benutzerdatenelement Daten umfasst, die sich auf mindestens eines von Folgendem beziehen:
Anmeldepasswortinformationen für einen Netzwerkzugriffsort des Informationshandhabungssystems;
Anmeldepasswortinformationen für eine Clientanwendung des Informationshandhabungssystems; und
Verifizierungsinformationen für eine Transaktion des Informationshandhabungssystems.

15. Computerprogramm, das sich auf einem computerlesbaren nichttransitorischen Medium befindet, das computerausführbaren Programmcode umfasst, der, wenn er von mindestens einem Prozessor einer Vorrichtung ausgeführt wird, die Vorrichtung veranlasst, das Verfahren nach Anspruch 13 oder 14 durchzuführen.

## Revendications

1. Dispositif qui est un premier noeud (210) d'un cercle de confiance (201) qui comprend une pluralité de noeuds utilisateurs (210, 220) appartenant à un même propriétaire et comportant le premier noeud (210) et un deuxième noeud (220) ; comprenant :
des moyens pour recevoir (320) un élément d'information utilisateur sensible ;
l'élément d'information utilisateur sensible étant associé à un système de traitement d'informations accessible par le premier noeud sur un réseau public ;
**caractérisé en ce que** le dispositif comprend en outre :
des moyens pour publier (330) l'élément d'information utilisateur sensible en tant que transaction dans le deuxième noeud (220) via un système de consensus distribué composé de la pluralité de noeuds utilisateurs ;
des moyens pour enregistrer (340) la transaction dans une chaîne de blocs privée du cercle de confiance en réponse à la confirmation de la transaction par le deuxième noeud (220) selon le système de consensus distribué ; et
des moyens pour partager (350) la chaîne de blocs privée au sein du cercle de confiance (201).

2. Dispositif selon la revendication 1, dans lequel l'élément d'information utilisateur sensible comprend des données relatives à au moins l'un des éléments suivants :
des informations de mot de passe de connexion pour un emplacement d'accès au réseau du système de traitement d'informations ;
des informations de mot de passe de connexion pour une application client du système de traitement d'informations ; et
des informations de vérification de la transaction du système de traitement d'informations.

3. Dispositif selon la revendication 1 ou 2, comprenant en outre :
des moyens pour appliquer l'élément d'information utilisateur sensible par l'un quelconque de la pluralité de noeuds utilisateurs du cercle de confiance pour accéder au système de traitement d'informations ou communiquer avec celui-ci.

4. Dispositif selon la revendication 3, comprenant en outre :
des moyens pour appliquer l'élément d'information utilisateur sensible localement dans au moins un noeud de la pluralité de noeuds utilisateurs du cercle de confiance.

5. Dispositif selon la revendication 3, comprenant en outre :
des moyens pour appliquer l'élément d'information utilisateur sensible sur le réseau public par au moins un noeud de la pluralité de noeuds utilisateurs du cercle de confiance pour accéder au système de traitement d'informations ou communiquer avec celui-ci.

6. Dispositif selon l'une des revendications 1 à 5, comprenant en outre :
des moyens pour définir un enregistrement dans la chaîne de blocs privée, l'enregistrement identifiant des noeuds de confiance du cercle de confiance, chaque noeud de confiance étant identifié par un identifiant de noeud unique.

7. Dispositif selon la revendication 6, dans lequel l'identifiant unique comprend une clé publique, la clé publique étant associée à une clé secrète stockée dans chaque noeud de confiance.

8. Dispositif selon la revendication 7, comprenant en outre :
des moyens pour générer une paire de clés publique et secrète dans chaque noeud du cercle de confiance.

9. Dispositif selon la revendication 8, comprenant en outre :
des moyens pour stocker la clé secrète dans un élément sécurisé dans chaque noeud du cercle de confiance, l'élément sécurisé comprenant un module électronique séparé avec des entrées/sorties limitées à l'intérieur du noeud.

10. Dispositif selon l'une des revendications 1 à 9, comprenant en outre :
des moyens pour définir un enregistrement dans la chaîne de blocs privée, l'enregistrement comprenant un élément d'information utilisateur sensibles d'au moins un utilisateur ou un noeud de confiance des noeuds de confiance du cercle de confiance, dans lequel les éléments d'information utilisateur sensible comprennent au moins l'un parmi : un ID de dispositif, un nom de dispositif, un type de dispositif, un propriétaire de dispositif, des capacités biométriques d'un utilisateur, des informations d'emplacement, des droits d'accès et/ou un niveau d'accès aux données utilisateur sensibles comportant les mots de passe pour les sites web et les applications, et des historiques d'utilisation.

11. Dispositif selon l'une des revendications 1 à 10, comprenant en outre :
des moyens pour recevoir une demande d'ajout ou de suppression d'un noeud de confiance du cercle de confiance ;
des moyens pour publier la demande en tant que transaction dans un deuxième noeud du cercle de confiance via un système de consensus distribué composé de la pluralité de noeuds utilisateurs ; et
des moyens pour enregistrer l'ajout ou la suppression du noeud de confiance en tant que transaction dans la chaîne de blocs privée du cercle de confiance en réponse à la confirmation de la demande de transaction par le deuxième noeud selon le système de consensus distribué.

12. Dispositif selon l'une des revendications 1 à 11, comprenant en outre des moyens pour faciliter la vérification et l'authentification des transactions des noeuds du cercle de confiance selon les termes des paramètres prédéfinis de la chaîne de blocs privée.

13. Procédé dans un premier noeud (210) d'un cercle de confiance (201) qui comprend une pluralité de noeuds utilisateurs (210, 220) appartenant à un même propriétaire et comportant le premier noeud (210) et un deuxième noeud (220), comprenant :
la réception (320) d'un élément d'information utilisateur sensible ;
l'élément d'information utilisateur sensible étant associé à un système de traitement d'informations accessible par le premier noeud (210) sur un réseau public ;
**caractérisé en ce que** le procédé comprend en outre :
la publication de l'élément d'information utilisateur sensible tant que transaction dans le deuxième noeud (220) via un système de consensus distribué composé de la pluralité de noeuds utilisateurs (210, 220) ;
l'enregistrement de la transaction dans une chaîne de blocs privée du cercle de confiance (201) en réponse à la confirmation de la transaction par le deuxième noeud (220) selon le système de consensus distribué ; et
le partage de la chaîne de blocs privée au sein du cercle de confiance (201).

14. Procédé selon la revendication 13, dans lequel l'élément d'information utilisateur sensible comprend des données relatives à au moins l'un des éléments suivants :
des informations de mot de passe de connexion pour un emplacement d'accès au réseau du système de traitement d'informations ;
des informations de mot de passe de connexion pour une application client du système de traitement d'informations ; et
des informations de vérification de la transaction du système de traitement d'informations.

15. Programme informatique incorporé dans un support non transitoire lisible par ordinateur comprenant un code de programme exécutable par ordinateur qui, lorsqu'il est exécuté par au moins un processeur d'un dispositif, amène le dispositif à réaliser le procédé selon la revendication 13 ou 14.
